# EUROPEAN PATENT APPLICATION

(11) **EP 3 663 540 A1**
(43) Date of publication of application: **10.06.2020**
(21) Application number: 19201569.1
(22) Date of filing: 04.10.2019
(51) Int. Cl.: F01D 25/12

(54) **COOLING SYSTEM**

(30) Priority: 07.12.2018 US 201816213654
(71) Applicant: United Technologies Corporation, Farmington, CT 06032 (US)
(72) Inventor: ROMANOV, Dmitriy A., Wells, ME Maine 04090 (US); PERALTA, Pedro Manuel, PMB194 San Antonio Puerto Rico, 00690 (PR)
(74) Representative: Dehns

(57) **Abstract**

A cooling system (52) includes a first surface (56), a second surface (54) distant from the first surface (56, 156), and a plenum (58) formed between the first surface (56) and the second surface (54). The second surface (54) includes a plurality of impingement holes (60) extending through the second surface (54) and configured to provide cooling fluid (62) to the plenum (58) and first surface (56) with the plurality of impingement holes (60) each being angled relative to a line perpendicular to a tangent line corresponding to each of the plurality of impingement holes (60). The first surface (56) and the second surface (54) can be annular in shape with the first surface (56) radially inward from the second surface (54) or the second surface (54) radially inward from the first surface (56). A corresponding method of cooling an inner surface of an annular plenum (58) comprises introducing cooling fluid (62) into the plenum (58) via a plurality of impingement holes (60) extending through an outer surface (54) of the plenum (58).

## Description

### FIELD OF THE INVENTION

The present disclosure relates to providing cooling fluid to components and, in particular, to the use of angled impingement holes for directing cooling fluid at an inner surface of a plenum.

### BACKGROUND

Components subject to elevated temperatures, such as a blade outer air seal (BOAS) in a gas turbine engine, are often in need of cooling fluid to ensure the components remain at a workable temperature. Usually, cooling fluid is provided to the BOAS via impingement holes. The surface area of the impingement holes must be a sufficiently large to ensure the impingement holes do not become clogged by debris within the cooling fluid. Additionally, the BOAS may require only minimal dedicated cooling flow (as the BOAS may need only a moderate amount of cooling). However, a pressure adjacent the BOAS may need to be maintained at an elevated level. Because the surface area of the impingement holes must be sufficiently large to prevent clogging while the pressure adjacent the BOAS must be elevated, the number of impingement holes providing cooling fluid is reduced. With a limited number of impingement holes, the cooling fluid is introduced only at a few discrete locations, causing the BOAS to have areas of elevated cooling flow (i.e., too much cooling) while other areas of the BOAS experience insufficient cooling flow (i.e., too little cooling).

### SUMMARY

In accordance with a first aspect of the invention, a cooling system includes a first surface, a second surface distant from the first surface, and a plenum formed between the first surface and the second surface. The second surface includes a plurality of impingement holes extending through the second surface and configured to provide cooling fluid to the plenum and first surface with the plurality of impingement holes each being angled relative to a line perpendicular to a tangent line corresponding to each of the plurality of impingement holes. The first surface and the second surface can be annular in shape with the first surface radially inward from the second surface or the second surface radially inward from the first surface.

In accordance with a second aspect of the invention, a method of cooling an inner surface of an annular plenum includes introducing cooling fluid into the plenum via a plurality of impingement holes extending through an outer surface of the plenum. The plurality of impingement holes are each angled relative to a line perpendicular to a tangent line corresponding to each of the plurality of impingement holes.

### BRIEF DESCRIPTION OF THE DRAWINGS

FIG. 1 schematically illustrates an exemplary gas turbine engine
FIG. 2 is a cross-sectional view of a plenum with impingement cooling holes at a large angle.
FIG. 3 is a cross-sectional view of a plenum with impingement cooling holes at a small angle.

### DETAILED DESCRIPTION

A cooling system is disclosed herein for providing cooling fluid to components subject to elevated temperatures, such as blade outer air seals (BOAS) in a gas turbine engine. The cooling system includes a plurality of impingement holes extending through an outer surface to provide cooling fluid to an annular plenum radially outward from an inner surface (which can be the BOAS or other components in need of cooling). The plurality of impingement holes extend through the outer surface at an angle measured relative to a line perpendicular to a tangent line corresponding to the outer surface. The angle of the impingement holes can vary depending on the cooling needs of the inner surface. The greater the angle relative to the line perpendicular to the tangent line, the greater the cooling flow velocity in a circumferential direction within the plenum (i.e., the greater the flow through the plenum and not directed at the inner surface). For example, a large angle produces a cooling flow in the circumferential direction within the plenum to provide uniform cooling flow across the inner surface. A small angle produces a cooling flow partially in the circumferential direction and partially directed at the inner surface to provide increased cooling to designated hot spots. The impingement holes can be equally spaced circumferentially around the outer surface and/or specifically located to provide increased cooling to designated hot spots.

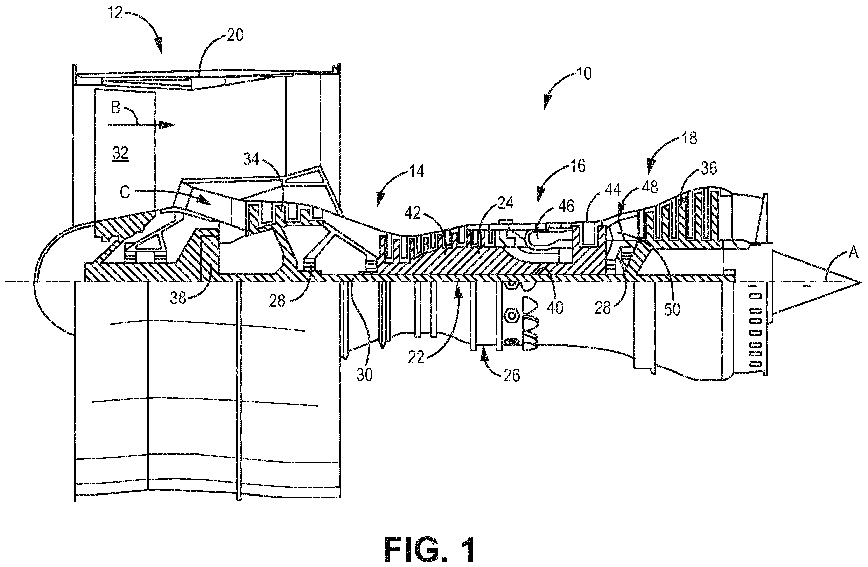

FIG. 1 schematically illustrates gas turbine engine 10. Gas turbine engine 10 is disclosed herein as a two-spool turbofan that generally incorporates fan section 12, compressor section 14, combustor section 16, and turbine section 18. Fan section 12 drives air along bypass flow path B in a bypass duct defined within nacelle 20, while compressor section 14 drives air along core flow path C for compression and communication into combustor section 16 then expansion through turbine section 18. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary gas turbine engine 10 generally includes low speed spool 22 and high speed spool 24 mounted for rotation about an engine central longitudinal axis A relative to engine static structure 26 via several bearing systems 28. It should be understood that various bearing systems 28 at various locations may alternatively or additionally be provided, and the location of bearing systems 28 may be varied as appropriate to the application.

Low speed spool 22 generally includes inner shaft 30 that interconnects fan 32, first (or low) pressure compressor 34 and first (or low) pressure turbine 36. Inner shaft 30 is connected to fan 32 through a speed change mechanism, which in exemplary gas turbine engine 10 is illustrated as geared architecture 38 to drive fan 32 at a lower speed than low speed spool 22. High speed spool 24 includes outer shaft 40 that interconnect second (or high) pressure compressor 42 and second (or high) pressure turbine 44. Combustor 46 is arranged in exemplary gas turbine 10 between high pressure compressor 42 and high pressure turbine 44. Mid-turbine frame 48 of engine static structure 26 is arranged generally between high pressure turbine 44 and low pressure turbine 36. Mid-turbine frame 48 further supports bearing systems 28 in turbine section 18. Inner shaft 30 and outer shaft 40 are concentric and rotate via bearing systems 28 about the engine central longitudinal axis A which is collinear with their longitudinal axes.

The core airflow is compressed by low pressure compressor 34 then high pressure compressor 42, mixed and burned with fuel in combustor 46, then expanded over high pressure turbine 44 and low pressure turbine 36. Mid-turbine frame 48 includes airfoils 50 which are in the core airflow path C. Outward from airfoils 50 and other rotating blades can be blade outer air seals (BOAS) that reduce the clearance between airfoils 50 and the BOAS to increase the efficiency of engine 10. Turbines 36, 44 rotationally drive respective low speed spool 22 and high speed spool 24 in response to the expansion. It will be appreciated that each of the positions of fan section 12, compressor section 14, combustor section 16, turbine section 18, and fan drive gear system 38 may be varied. For example, gear system 38 may be located aft of combustor section 16 or even aft of turbine section 18, and fan section 12 may be positioned forward or aft of the location of gear system 38.

Gas turbine engine 10 in one example is a high-bypass geared aircraft engine. In a further example, engine 10 bypass ratio is greater than about six, with an example embodiment being greater than about ten, geared architecture 38 is an epicyclic gear train, such as a planetary gear system or other gear system, with a gear reduction ratio of greater than about 2.3 and low pressure turbine 36 has a pressure ratio that is greater than about five. In one disclosed embodiment, engine 10 bypass ratio is greater than about ten, the fan diameter is significantly larger than that of low pressure compressor 34, and low pressure turbine 36 has a pressure ratio that is greater than about five. Low pressure turbine 36 pressure ratio is pressure measured prior to inlet of low pressure turbine 36 as related to the pressure at the outlet of low pressure turbine 36 prior to an exhaust nozzle. Geared architecture 38 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by bypass flow B due to the high bypass ratio. Fan section 12 of engine 10 is designed for a particular flight condition typically cruise at about 0.8 Mach and about 35,000 feet. The flight condition of 0.8 Mach and 35,000 ft (10,668 meters), with the engine at its best fuel consumption also known as "bucket cruise Thrust Specific Fuel Consumption ('TSFC')" is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram ^{∘} R)/(518.7^{∘} R)]^0.5 (where ^{∘}R = K x 9/5). The "Low corrected fan tip speed" as disclosed herein according to one non-limiting embodiment is less than about 1150 ft/second (350.5 meters/second).

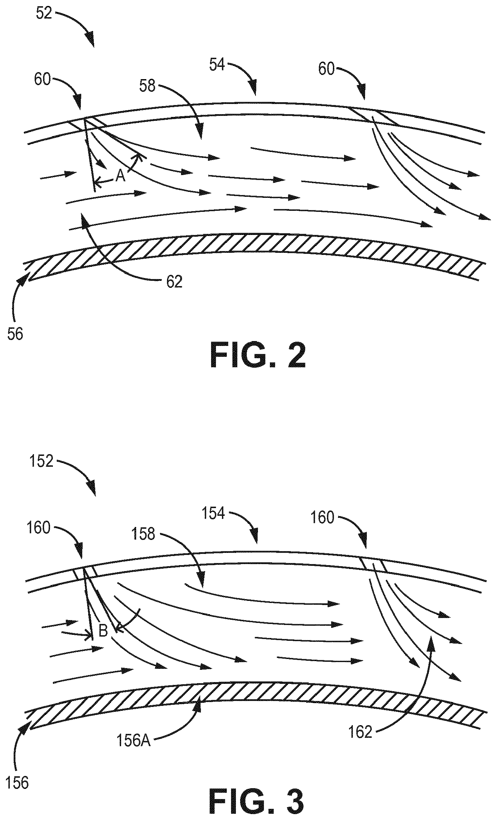

FIG. 2 is a partial cross-sectional view of cooling system 52. Cooling system 52 includes outer surface 54 (which can be a first surface or a second surface) and inner surface 56 (which can be a first surface or a second surface) forming the radially outer and radially inner boundaries of plenum 58, respectively. Plurality of impingement holes 60 extend through outer surface 54 at angle A, while cooling fluid 62 flows within plenum 58.

Cooling system 52 can be located within engine 10 at any location in which cooling fluid 20 is needed to cool one or multiple components, such as radially inward or outward from rotating or stationary airfoils in engine 10. As shown in FIG. 2, cooling system 52 is generally in an annular configuration with outer surface 54, inner surface 56, and plenum 58 all being annular in shape. However, other embodiments of cooling system 52 can have other configurations, such as a plenum that is straight, rectangular (i.e., has 90 degree turns), oval, hexagonal, or another shape. Further, while outer surface 54 and inner surface 56 are shown as being coaxial with outer surface 54 being a constant circumferential distance from inner surface 56, some embodiments can include configurations in which outer surface 54 is a varying circumferential distance from inner surface 56.

Inner surface 56 forms the radially inner boundary of plenum 58 and can be annular in shape. Inner surface 56 can be one or a series of blade outer air seals (BOAS) radially outward from rotors/airfoils 50 of gas turbine engine 10, a shroud that is radially outward from stators of gas turbine engine 10, or another component subject to elevated temperatures and in need of cooling from cooling fluid 62. Inner surface 56 can be an axially extending hollow cylinder extending along and centered about engine central longitudinal axis A of gas turbine engine 10. Inner surface 56 can be as thin or thick as necessary and can have a varying or constant thickness depending on design considerations. Inner surface 56 can have designated hot spots (i.e., areas that have a temperature that is greater than surrounding areas of inner surface 56). These hot spots can be caused by a variety of factors, such as friction between rotors and the BOAS. Inner surface 56 can have various features extending radially inward or outward into plenum 58, such as ribs for additional structural strength or fins for additional heat transfer.

Outer surface 54 forms the radially outer boundary of plenum 58 and can be annular in shape. Outer surface 54 can be a shroud or another component that extends continuously in a circumferential direction to bound plenum 58. Outer surface 54 can be an axially extending hollow cylinder extending along and centered about engine central longitudinal axis A of gas turbine engine 10 so as to be coaxial with inner surface 56. Outer surface 54 can be as thin or thick as necessary and can have a varying or constant thickness depending on design considerations. Outer surface 54 can have various features extending radially inward into plenum 58 or outward, such as ribs for additional structural support or features to guide the flow of cooling fluid 62 within plenum 58. As described below, outer surface 54 includes plurality of impingement holes 60 through which cooling fluid 62 flows into plenum 58 to cool inner surface 56.

Plenum 58 can be an annular void formed by outer surface 54 on a radially outer side and inner surface 56 on a radially inner side. Plenum 58 can have any shape. However, in cooling system 52 shown in FIG. 1, plenum 58 is annular in shape and extends continuously in the circumferential direction around inner surface 56 such that cooling fluid 62 flowing into plenum 58 through plurality of impingement holes 60 can flow in a continuous circumferential direction. In some embodiments, cooling fluid 62 within plenum 58 may be required to be at an increased pressure (relative to surrounding components) to seal inner surface 56 or for other reasons. Cooling fluid 62 can be any type of fluid suitable to accept thermal energy from outer surface 54, such as air, lubricant, water, or another fluid.

Plurality of impingement holes 60 extend through outer surface 54 and are configured to provide cooling fluid 62 to plenum 58 to cool inner surface 56. Plurality of impingement holes 60 can extend through outer surface at any angle A, which is measured from a line perpendicular to a tangent line corresponding to each hole of plurality of impingement holes 60. Plurality of impingement holes 60 can have any number of impingement holes circumferentially (and/or axially) equally spaced apart from one another around outer surface 54, or plurality of impingement holes 60 can be varying distances from adjacent impingement holes. For example, cooling system 52 can include at least four impingement holes equally spaced around the circumference of outer surface 54 and/or outer surface 54 can include at least one impingement hole per approximately 45 degrees of circumferential surface arc length. Plurality of impingement holes 60 can be axially in series such that outer surface 54 includes multiple rows of impingement holes in an axial direction. Additionally, each of plurality of impingement holes 60 can have any cross-sectional shape and/or cross-sectional area (measured at the radially outer point of plurality of impingement holes 60, which is a radially outer side of outer surface 54), such as a circular cross-sectional shape with a typical minimal area of 0.00146 square centimeters (0.000227 square inches) to prevent clogging. Further, each of the plurality of impingement holes 60 can have different shapes and cross-sectional areas than adjacent holes depending on the cooling needs of cooling system 52 and other design considerations. Each of the plurality of impingement holes 60 can have a constant cross-sectional shape as the holes extends through outer surface 54 so that cooling fluid 62 flowing through plurality of impingement holes 60 does not substantially change velocity and enters plenum 58 under constant-velocity flow, making the cooling capabilities of cooling system 52 more predictable.

In FIG. 2, angle A is large and, in particular, is approximately 50 degrees. Due to the large angle of plurality of impingement holes 60, cooling fluid 62 is introduced into plenum 58 with a greater circumferential velocity so that a majority of cooling fluid 62 flows in the circumferential direction immediately after entering plenum 58. With such a configuration having a large angle A of plurality of impingement holes 60, the cooling capacity is evenly distributed across the entire surface area of inner surface 56 because cooling fluid 62 flows evenly over inner surface 56. A large angle A of plurality of impingement holes 60 allows for uniform cooling even when the number of impingement holes is small (because the pressure within plenum 58 needs to be elevated while the cross-sectional area of the impingement holes is maintained sufficiently large to prevent clogging).

FIG. 3 is a partial cross-sectional view of cooling system 152. Cooling system 152 in FIG. 3 is similar in configuration and functionality to cooling system 52 in FIG. 2 (except for angle B of plurality of impingement holes 160 and inner surface 156 having at least one hot spot 156A). If a particular component is not described in detail with regards to cooling system 152, then the component has the same configuration and functionality of the similarly named and numbered component of cooling system 52. Cooling system 152 includes outer surface 154 and inner surface 156 (with hot spot 156A) forming radially outer and radially inner boundaries of plenum 158. Plurality of impingement holes 160 extend through outer surface 154 at angle B, while cooling fluid 162 flows within plenum 158.

Plurality of impingement holes 160 extend through outer surface 154 and are configured to provide cooling fluid 162 to plenum 158 to cool inner surface 156. Plurality of impingement holes 160 can extend through outer surface at any angle B, which is measured from a line perpendicular to a tangent line corresponding to each hole of plurality of holes 160. Plurality of impingement holes 160 can have any number of impingement holes circumferentially (and/or axially) equally spaced apart from one another around outer surface 154, or plurality of impingement holes 160 can be varying distances from adjacent impingement holes. For example, cooling system 152 can include at least 4 impingement holes equally spaced around the circumference of outer surface 154 and/or outer surface 154 can include at least one impingement hole per 45 degrees of circumferential surface arc length. Plurality of impingement holes 160 can be axially in series such that outer surface 154 includes multiple rows of impingement holes. Additionally, each of plurality of impingement holes 160 can have any cross-sectional shape and/or cross-sectional areas (i.e., flow areas), such as a circular cross-sectional shape with a typical minimal area of 0.00146 square centimeters (0.000227 square inches) to prevent clogging. Further, each of the plurality of impingement holes 160 can have different shapes and cross-sectional areas than adjacent holes depending on the cooling needs of cooling system 152 and other design considerations.

In FIG. 3, angle B is small relative to angle A and, in particular, is approximately 20 degrees. With angle B of plurality of impingement holes 160 being greater than zero but less than angle A, cooling fluid 162 is introduced into plenum 158 with some radial velocity and some circumferential velocity. This results in a portion of cooling fluid 162 contacting inner surface 156 at hot spot 156A immediately after entering plenum 158 and a portion of cooling fluid 162 flowing in the circumferential direction immediately after entering plenum 158. With such a configuration having a nonzero angle B that is small relative to the configuration in cooling system 52, designated hot spots 156A on inner surface 156 can receive additional cooling from a portion of cooling fluid 162 contacting those designated areas on inner surface 156 while the remaining portion of inner surface 156 receives even, uniform cooling from the portion of cooling fluid 162 that is flowing in the circumferential direction around plenum 158. Thus, a location of one or all of plurality of impingement holes 160 can be selected to provide additional cooling to hot spots 156A on inner surface 156 while still providing necessary cooling to other portions of inner surface 156. In FIG. 3, plurality of impingement holes 160 are positioned to be approximately radially outward from (i.e., radially in line with) hot spots 156A to provide additional cooling fluid 152 to hot spots 156A.

While the embodiments in FIGS. 2 and 3 show plurality of impingement holes 60/160 extending through outer surface 54/154 to providing cooling fluid 62/162 to plenum 58/158 to cool inner surface 56/156, another configuration of cooling system 52/152 can have plurality of impingement holes 60/160 extending through inner surface 56/156 to cool outer surface 56/156, which can be an inner platform of a vane array or another component. Such a configuration would be very similar to that of cooling system 52/152 with plurality of impingement holes 60/160 extending through inner surface 56/156 at an angle so that cooling fluid 62/162 flows at least partially in the circumferential direction to cool outer surface 54/154.

The disclosed cooling system 52/152 can be utilized for passive cooling to ensure the components (i.e., inner surface 56 and/or outer surface 54) do not experience elevated temperatures. Additionally, cooling system 52/152 can be utilized for active clearance control, such as when inner surface 56/156 (or outer surface 54/154) is a shroud, BOAS, or another component that is adjacent to rotating or stationary airfoils. In such a configuration, cooling system 52/152 controls the thermal expansion/contraction of inner surface 56/156 and outer surface 54/154 to maintain proper clearance between inner surface 56/156 (and/or outer surface 54/154) and the adjacent rotating or stationary airfoils.

Cooling system 52/152 disclosed herein provides cooling fluid 62/162 to components subject to elevated temperatures, such as blade outer air seals (BOAS) in gas turbine engine 10. Cooling system 52/152 includes plurality of impingement holes 60/160 extending through outer surface 54/154 to provide cooling fluid 62/162 to annular plenum 58/158 radially outward from inner surface 56/156 (which can be the BOAS or other components in need of cooling). Plurality of impingement holes 60/160 extends through outer surface 54/154 at angle A/B relative to a line perpendicular to a tangent line corresponding to outer surface 54/154. Angle A/B of plurality of impingement holes 60/160 can vary depending on the cooling needs of inner surface 56/156. The greater angle A/B, the greater the cooling flow velocity in a circumferential direction within plenum 58/158. For example, large angle A produces a cooling flow in the circumferential direction within plenum 58 to provide uniform cooling flow across inner surface 56. Small angle B (while angle B remains nonzero) produces a cooling flow partially in the circumferential direction and partially directed at inner surface 156 to provide increased cooling to designated hot spots 156A. Plurality of impingement holes 60/160 can be equally spaced circumferentially around outer surface 54/154 and/or specifically located to provide increased cooling to designated hot spots.

### Discussion of Possible Embodiments

The following are non-exclusive descriptions of possible embodiments of the present invention.

A cooling system includes a first surface, a second surface distant from the first surface, and a plenum formed between the first surface and the second surface. The second surface includes a plurality of impingement holes extending through the second surface and configured to provide cooling fluid to the plenum and first surface with the plurality of impingement holes each being angled relative to a line perpendicular to a tangent line corresponding to each of the plurality of impingement holes.

The cooling system can optionally include, additionally and/or alternatively, any one or more of the following features, configurations, and/or additional components:
The first surface and the second surface are annular in shape.

The first surface is radially inward from the second surface.

The first surface is radially outward from the second surface.

The second surface includes at least one impingement hole per 45 degrees of circumferential surface arc length.

Each of the plurality of impingement holes is angled at least 20 degrees.

The plurality of impingement holes are each located to provide a portion of the cooling fluid flowing through each of the plurality of impingement holes to areas of the first surface in line with each of the plurality of impingement holes.

Each of the plurality of impingement holes is angled at least 50 degrees.

The angle of each of the plurality of impingement holes results in a majority of the cooling fluid forming a cooling flow through the plenum.

The plurality of impingement holes direct cooling fluid into the plenum to form a cooling flow at least partially through the plenum.

The plurality of impingement holes includes at least four impingement holes equally spaced about the second surface.

A cross-sectional area of each impingement hole of the plurality of impingement holes is at least 0.00146 square centimeters (0.000227 square inches).

The first surface is a blade outer air seal that is radially outward from rotors of a gas turbine engine and the second surface is radially outward from the first surface.

The first surface is a shroud that is radially outward from stators of a gas turbine engine and the second surface is radially outward from the first surface.

The first surface is a platform that is radially inward from a vane array of a gas turbine engine and the second surface is radially inward from the first surface.

A method of cooling an inner surface of an annular plenum includes introducing cooling fluid into the plenum via a plurality of impingement holes extending through an outer surface of the plenum. The plurality of impingement holes are each angled relative to a line perpendicular to a tangent line corresponding to each of the plurality of impingement holes.

The method of the preceding paragraph can optionally include, additionally and/or alternatively, any one or more of the following features, configurations, steps, and/or additional components:
Directing the cooling fluid in a circumferential direction such that the cooling fluid entering the plenum through the plurality of impingement holes does not immediately contact the inner surface.

The angle of each of the plurality of impingement holes is at least 50 degrees.

Directing at least a portion of the cooling fluid at a hot spot on the inner surface of the plenum by selectively positioning at least one of the plurality of impingement holes.

The angle of each of the plurality of impingement holes is at least 20 degrees.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A cooling system (52, 152) comprising:
a first surface (56, 156);
a second surface (54, 154) distant from the first surface (56, 156);
a plenum (58, 158) formed between the first surface (56, 156) and the second surface (54, 154); and
a plurality of impingement holes (60, 160) extending through the second surface (54, 154) and configured to provide cooling fluid (62, 162) to the plenum (58, 158) and first surface (56, 156), the plurality of impingement holes (60, 160) each being angled relative to a line perpendicular to a tangent line corresponding to each of the plurality of impingement holes (60, 160).

2. The cooling system of claim 1, wherein the first surface (56, 156) and the second surface (54, 154) are annular in shape.

3. The cooling system of claim 2, wherein the first surface (56, 156) is radially inward from the second surface (54, 154).

4. The cooling system of claim 3, wherein the first surface (56, 156) is a blade outer air seal that is radially outward from rotors of a gas turbine engine, or the first surface (56, 156) is a shroud that is radially outward from stators of a gas turbine engine.

5. The cooling system of claim 2, wherein the first surface (56, 156) is radially outward from the second surface (54, 154).

6. The cooling system of claim 5, wherein the first surface (56, 156) is a platform that is radially inward from a vane array of a gas turbine engine.

7. The cooling system of any of claims 2 to 6, wherein the second surface (54, 154) includes at least one impingement hole (60, 160) per 45 degrees of circumferential surface arc length.

8. The cooling system of any preceding claim, wherein each of the plurality of impingement holes (60, 160) is angled at at least 20 degrees to the line perpendicular to the tangent line, wherein, optionally, the plurality of impingement holes (60, 160) are each located to provide a portion of the cooling fluid (62, 162) flowing through each of the plurality of impingement holes (60, 160) to areas of the first surface (56, 156) in line with each of the plurality of impingement holes (60, 160).

9. The cooling system of any of claims 1 to 7, wherein each of the plurality of impingement holes (60, 160) is angled at at least 50 degrees to the line perpendicular to the tangent line, wherein, optionally, the angle of each of the plurality of impingement holes (60, 160) results in a majority of the cooling fluid (62, 162) forming a cooling flow through the plenum (58, 158).

10. The cooling system of any preceding claim, wherein the plurality of impingement holes (60, 160) direct cooling fluid (62, 162) into the plenum (58, 158) to form a cooling flow at least partially through the plenum (58, 158).

11. The cooling system of any preceding claim, wherein the plurality of impingement holes (60, 160) includes at least four impingement holes (60, 160) equally spaced about the second surface (54, 154).

12. The cooling system of any preceding claim, wherein a cross-sectional area of each impingement hole (60, 160) of the plurality of impingement holes (60, 160) is at least 0.00146 square centimeters (0.000227 square inches).

13. A method of cooling an inner surface of an annular plenum (58, 158) comprising:
introducing cooling fluid (62, 162) into the plenum (58, 158) via a plurality of impingement holes (60, 160) extending through an outer surface (54, 154) of the plenum (58, 158),
wherein the plurality of impingement holes (60, 160) are each angled relative to a line perpendicular to a tangent line corresponding to each of the plurality of impingement holes (60, 160).

14. The method of claim 13, further comprising:
directing the cooling fluid (62, 162) in a circumferential direction such that the cooling fluid entering the plenum (58, 158) through the plurality of impingement holes (60, 160) does not immediately contact the inner surface (56, 156), wherein, optionally, the angle (A, B) of each of the plurality of impingement holes (60, 160) is at least 50 degrees to the line perpendicular to the tangent line.

15. The method of claim 13, further comprising:
directing at least a portion of the cooling fluid (62, 162) at a hot spot (156A) on an inner surface (56, 156) of the plenum (58, 158) by selectively positioning at least one of the plurality of impingement holes (60, 160), wherein, optionally, the angle (A, B) of each of the plurality of impingement holes (60, 160) is at least 20 degrees to the line perpendicular to the tangent line.
